# EUROPEAN PATENT SPECIFICATION

(11) **EP 1 253 528 B1**
(45) Date of publication and mention of the grant of the patent: **29.10.2008**
(21) Application number: 01303766.8
(22) Date of filing: 25.04.2001
(51) Int. Cl.: G06F 17/30, H04L 29/06

(54) **Connection services**
Verbindungsdienste
Services de connexion

(43) Date of publication of application: 30.10.2002
(73) Proprietor: Caplin Systems Limited, London EC2A 1BR (GB)
(72) Inventor: Caplin, Paul, London W11 2PY (GB)
(74) Representative: Walaski, Jan Filip

(56) References cited:
- EP-A- 0 895 173
- WO-A-98/12881
- LI GONG : " Secure Java class loading " IEEE INTERNET COMPUTING, [Online] vol. 2, no. 6, November 1998 (1998-11), pages 56-61, XP002177474 Retrieved from the Internet: <URL:http://citeseer.nj.nec.com/gong98secu re.html> [retrieved on 2001-09-14]
- MORIN J-H: "HyperNews, a hypermedia electronic-newspaper environment based on agents" PROCEEDINGS OF THE HAWAII INTERNATIONAL CONFERENCE ON SYSTEM SCIENCES, XX, XX, vol. 2, 6 January 1998 (1998-01-06), pages 58-67, XP002171033
- ERICK WARREN SELBERG: "Towards Comprehensive Web Search " [Online] 1999 , PHD THESIS, UNIVERSITY OF WASHINGTON , WASHINGTON XP002177475 Retrieved from the Internet: <URL: http://www.cs.washington.edu/homes/speed/p apers/thesis/thesis.ps> [retrieved on 2001-09-14] pag 1-6, Introduction pag 57-60, 4.1.2 Feedback with server push and Java

## Description

This invention relates to the provision of connection services across a communications network, particularly but not exclusively to a directory server and a method of providing information to a browser from a plurality of information servers with the aid of a directory server.

In the general model of a client-server system operating over any private or public network, such as the Internet, a client computer uses a web client, usually referred to as a browser, to connect to one of many available servers. In the case of, for example, real-time financial information, a multiplicity of service providers provide information over the Internet. In general terms, each provider has its own access requirements and uses its own symbology and its own presentation format, so that a subscriber to the information service provided by any particular provider has to set up a specific configuration for that service and often needs to download a provider specific viewer for viewing the service. A user will often require access to a number of information services from different service providers, ideally with the ability to display all of the specified information within a single screen.

WO 98/12881 describes a method of providing assistance to a user in accessing network attached information sources. A user query is intelligently routed to information sources relevant to that query, relevant data fields are extracted from received responses and presented to a user.

EP 0895173 relates to a mobile agent that obtains financial information from a plurality of server computers and transports itself to a user's computer to deliver the information.

Li Gong, 'Secure Java Class Loading', IEEE Internet Computing, Vol. 2, no.6, November 1998, pages 56 to 61, relates to secure Java class loading.

Morin, J-H., relates to a system in which agent based technology is used to present a hypermedia electronic newspaper to a user through a Java-based web browser.

Selberg, Erik Warren, 'Towards Comprehensive Web Search', 1999, PHD Thesis, University of Washington, describes a MetaCrawler that forwards a user query and combining results from multiple search services into a single list.

According to the present invention, there is provided a directory server for enabling a browser to connect to a plurality of information servers, comprising means for providing a program to the browser for execution by the browser, the program being operative to permit the browser to connect to each of the plurality of information servers in order to receive information from the information servers for concurrent display by the browser.

The program can be arranged to accept configuration information from a user, for example the urls of the servers, to permit the browser to connect to each of the plurality of information servers.

Alternatively, the directory server can further comprise means for receiving a request for information from the browser, the request relating to information available from the plurality of information servers, the program including configuration information to permit the browser to connect to each of the plurality of information services in accordance with the information request.

Advantageously, the connection data for all of the information servers is provided at the directory server so that the applet can be pre-configured. The browser can then obtain from a single source all the data necessary to establish multiple connections to a plurality of information servers operated by different service providers, without needing to establish entirely separate transactions with each service provider. Furthermore, payment can be arranged at the directory server, rather than with individual service providers.

According to the present invention, there is also provided a method of providing information to a browser from a plurality of information servers, comprising providing a program by a directory server to the browser for execution by the browser, the program being operative to permit the browser to connect to each of the plurality of information servers in order to receive information from the information servers for concurrent display by the browser.

The method can including associating verification information with the program to signify that it is a trusted program, including digitally signing the program at the directory server.

The program, such as a Java applet, in its default state, may prevent the browser from establishing connections to the information servers, in which case the method can further comprise requesting permission from the browser to override the default state in respect of the information servers corresponding to the information request.

In response to receiving permission from the browser, the applet can open a connection to each information server for which it is configured, can receive data from the servers and can provide the data for simultaneous display within a single browser screen.

According to the present invention, there is also provided a computer program for execution by a browser to enable the browser to connect to a plurality of information servers, comprising configuration information to permit the browser to connect to each of a plurality of information servers in accordance with an information request received from the browser at a directory server, the program being arranged such that, when executed by the browser, the program connects to the plurality of information servers in accordance with the information request in order to receive information from the information servers for concurrent display by the browser.

Embodiments of the invention will now be described, by way of example, with reference to the accompanying drawings, in which:
Figure 1 illustrates a conventional connection scheme between a client and multiple servers over a communications network;
Figure 2 illustrates a connection scheme according to a first aspect of the invention in which a directory server is provided;
Figure 3 is a schematic diagram of a conventional computer used to connect to a network;
Figure 4 is a flow diagram illustrating the process of connecting a client to a plurality of information servers using a directory server in accordance with the first aspect of the invention;
Figure 5 is a schematic diagram illustrating the data flows occurring in the system of Figure 2;
Figure 6 illustrates a web page produced by the directory server showing a directory of available information services;
Figure 7 illustrates a web page displaying real-time financial data from several information sources; and
Figure 8 is a flow diagram illustrating the process of connecting a client to a plurality of information servers in accordance with a second aspect of the invention.

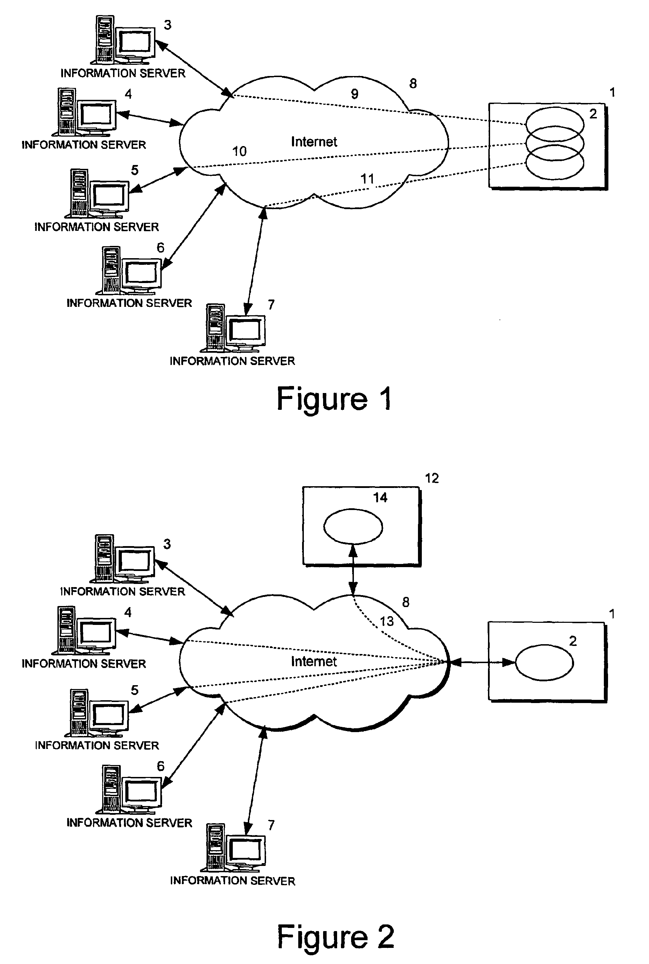

Figure 1 illustrates a conventional system by which a client computer 1 running multiple instances of browser software 2 obtains financial information from a number of service providers operating separate information servers 3 - 7 via a public network such as the Internet 8. To obtain the information, the client 1 establishes separate connections 9, 10, 11 from separate browser instances 2 to servers 3, 5, 7 operated by selected providers and downloads the relevant information. As a result, the client needs to obtain a separate subscription to each service provider, data from multiple providers cannot easily be combined on the client display and the formats and symbology used by each of the service providers are likely to be incompatible at the client 1.

Figure 2 illustrates a connection scheme in accordance with the invention. A directory server 12 is provided separate from the information servers 3 - 7. When the client 1 wishes to obtain financial information from any of the information servers 3 - 7, it first establishes a connection 13 to a web server process 14 running on the directory server machine 12, as will be described in more detail below.

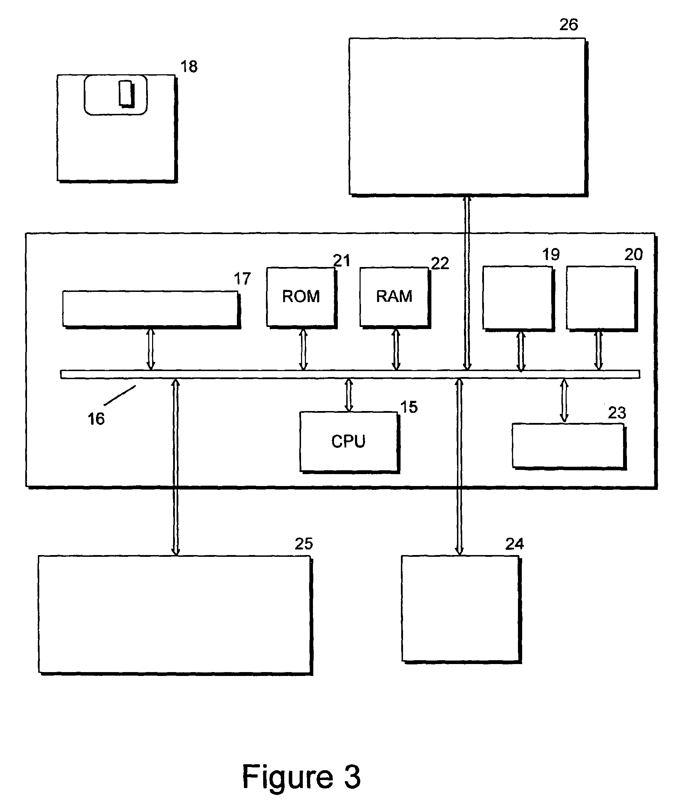

The client, information server and directory server computers 1, 3- 7, 12 are conventional computers, an example architecture for which is shown in Figure 3. Each computer comprises a central processing unit (CPU) 15 for executing computer programs and managing and controlling the operation of the computer. The CPU 15 is connected to a number of devices via a bus 16, the devices including a read/write device 17, for example a floppy disk drive for reading and writing data and computer programs to and from a removable storage medium such as a floppy disk 18, a storage device 19, for example a hard disk drive for storing system and application software, a CD-ROM drive 20 and memory devices including ROM 21 and RAM 22. The computer further includes a network card 23 for interfacing to a network such as the Internet 8 and user input/output devices, such as a mouse 24, keyboard 25 and display 26. It will be understood by the skilled person that the above described architecture is not limiting, but is merely an example of a typical computer architecture. It will be further understood that the described computer has all the necessary operating system and application software to enable it to fulfil its particular purpose, including web server and Java enabled browser software as appropriate.

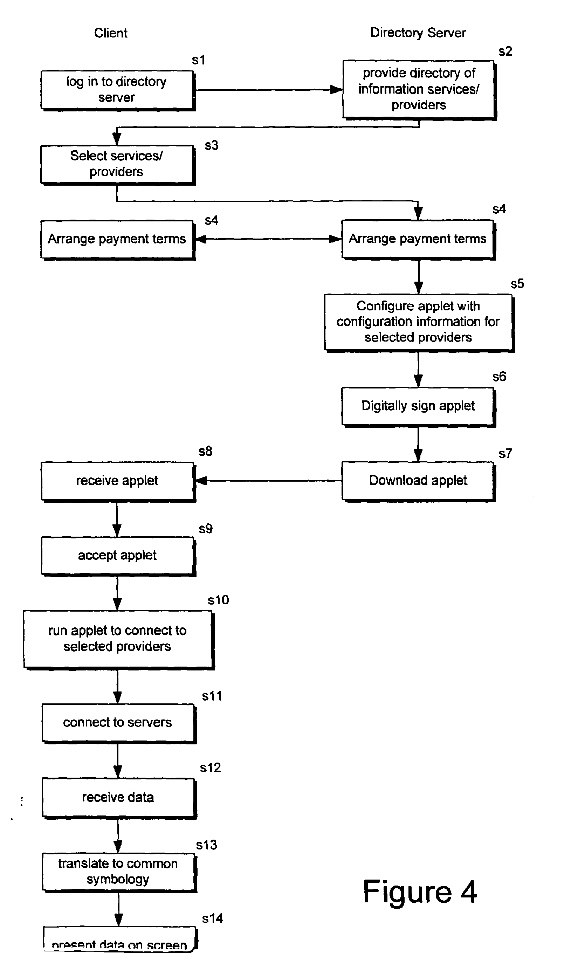

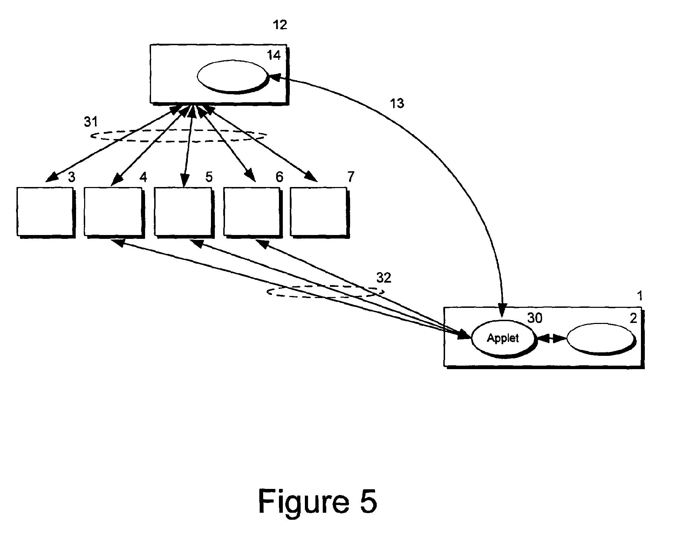

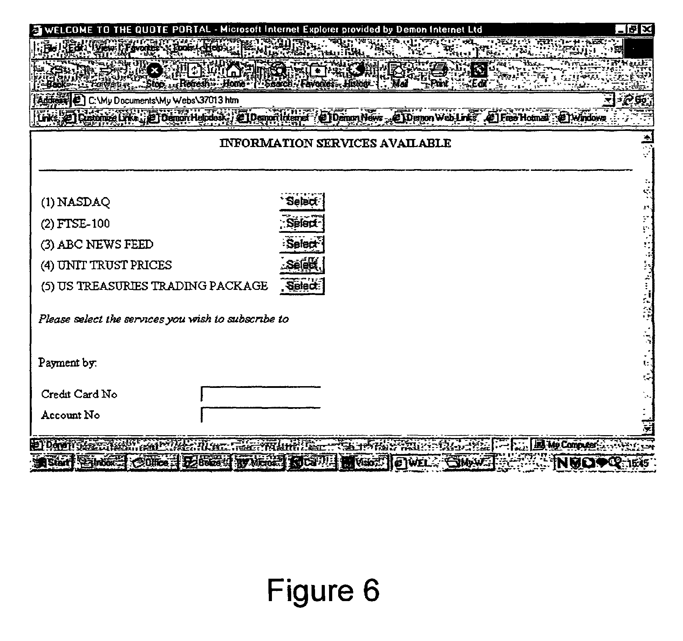

The procedure followed by a user wishing to obtain financial information from any of the servers 3 - 7 is described below with reference to Figures 4, 5 and 6. The servers 3 - 7 are configured as web servers which are capable of pushing streaming data to a browser. Referring to Figures 4 and 5, a user uses the browser software 2, for example Microsoft Internet Explorer™ or Netscape Navigator™, running on the client computer 1, to establish a connection 13 to the directory server (step s1). Web server software 14 running on the directory server machine 12 provides a web page having a directory of available information services or information service providers (step s2). An example web page, which is also referred to herein as a quote portal, is shown in Figure 6. The user selects the information services that he wishes to view (step s3) and payment terms are then arranged between the directory server 12 and the client 1 (step s4). The payment terms can comprise any commercial arrangement, for example a subscription fee payable through a pre-existing account arrangement for each information service selected. As well as selecting individual services, a user can be offered a number of trading packages which include a single subscription to all of the servers required for a particular type of trading activity.

Following arrangement of payment, the directory server 12 configures a Java™ applet 30 with all of the information required for the client 1 to log in to the servers providing the selected information services (step s5). This includes the URLs of the selected servers and login information. The configuration information is held by the directory server 12 by virtue of prior agreements 31 made with the service providers which maintain each of the information servers 3 - 7. The applet can also be configured to translate the symbology of each of the servers so that the symbols provided by each information provider are translated to a common symbol set for viewing by the client browser.

The configured applet 30 is digitally signed by the directory server 12 by means of a digital certificate (step s6) and downloaded to the client 1 (step s7).

The way in which an applet is digitally signed differs between browsers but is well known per se. The purpose of applying the digital signature is to enable the client 1 to override the applet's default behaviour. One of the main tenets of the Java™ language is to enable browsers to run untrusted applets safely. In general terms, all downloaded applets are considered to be untrusted. To prevent an applet from performing operations which could damage the client system on which it runs, an untrusted applet is prevented by the Java Applet Security Manager, which is part of the Java Run-time Environment running on the client's system, from performing a number of tasks on that system, which include writing to the client's local file system and making network connections other than to the originating host. This latter restriction would prevent the downloaded applet 30 from making the necessary network connections to the information servers 3 - 7.

The Java™ language provides mechanisms for converting untrusted applets to trusted applets. For example, in Java 2™, policy files stored on the client system control the functionality of signed applets. Further details of Java™ security issues can be found at the Java™ website, for example at http://java.sun.com.

Referring again to Figures 4 and 5, to enable an applet running at the client 1 to open direct connections 32 to the information servers 3 - 7, the applet 30 is converted to a trusted applet by the digital signature applied at the directory server 12. After the signed applet 30 is received at the client 1 (step s8) the user explicitly accepts the signed applet (step s9) to enable the system of the invention to operate. On indicating acceptance, the applet is run (step s10) and opens connections 32 to each of the selected servers 4, 5, 6 (step s11). The applet 30 then receives streaming data from each server (step s12), translates the symbology used by each particular server to a common symbology for display (step s13) and presents that data to the browser screen for display (step s14).

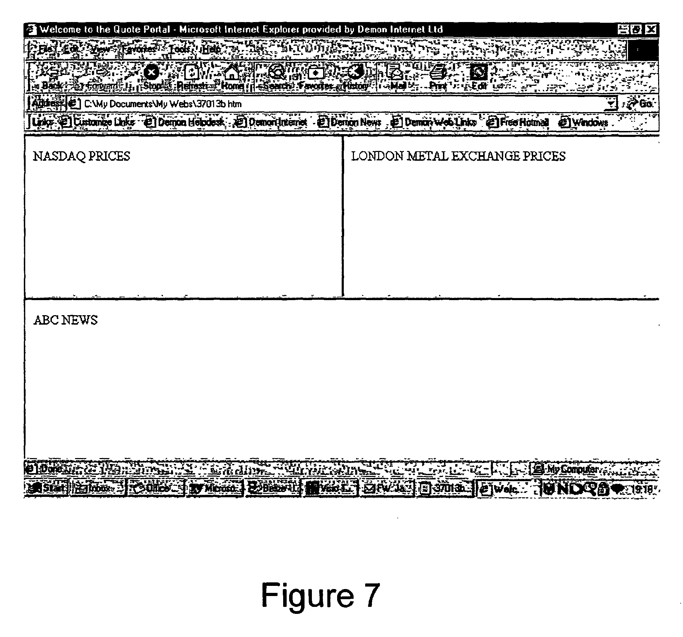

Figure 7 shows an example browser screen divided into three parts so that data from each of the servers can be simultaneously displayed on different parts of the screen. It is equally possible to combine data from several servers within any one part of the screen, or combine arithmetically data elements from multiple sources to produce derived data for display. The opening of simultaneous connections to each of the data servers is handled by the multithreading capability of the Java™ language.

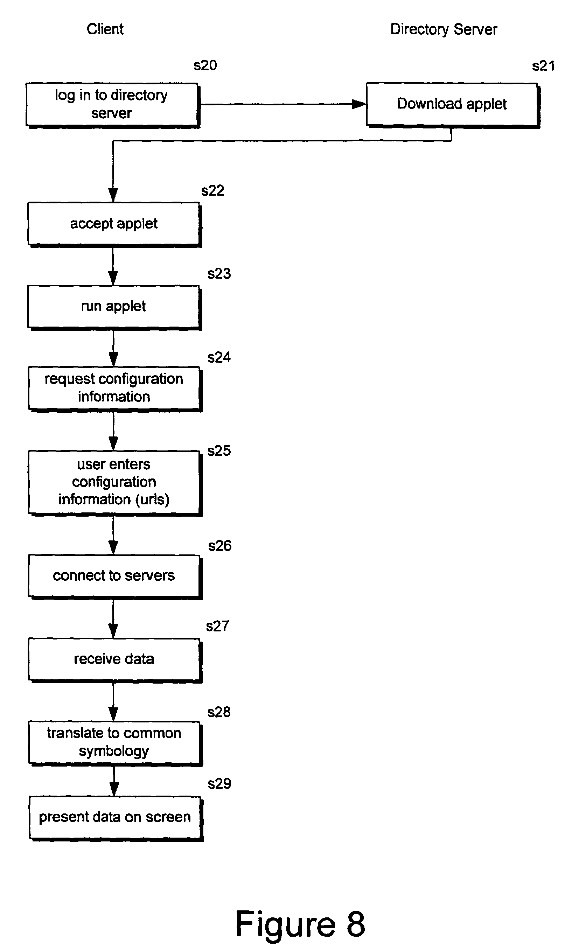

The example above has been primarily described in terms of the directory server providing a directory of information servers and pre-configuring the applet with information to enable the applet to connect to the selected servers. In a further embodiment, the directory server simply provides an applet which is capable of connecting to multiple information servers and capable of accepting configuration information from the user to connect to the required information servers. Referring to Figure 8, a client uses a browser to connect to the directory server (step s20), from which the client downloads a signed applet (step s21). As in the case of the first embodiment, the user accepts the signed applet (step s22), which then runs on the client machine (step s23) and requests configuration information for the servers to which it is permitted to connect, for example via a dialog box (step s24). The user enters the configuration information, for example, the urls for the required servers (step s25) and the applet then opens connections to the requested servers (step s26). The receipt of data, symbology translation and data presentation proceeds in a similar way to that of the first embodiment (steps s27 - s29).

While the embodiments have been described in terms of the use of a Java™ applet, the skilled person will appreciate that the invention can be implemented by the use of any computer language which has similar functionality.

## Claims

1. A directory server (12) for enabling a browser (2) to connect to a plurality of information servers (3-7), comprising:
means for providing a program (30) to the browser (2) for execution by the browser (2), the program (30) being operative to permit the browser (2) to connect to each of the plurality of information servers (3-7) in order to receive information from the information servers (3-7) for concurrent display by the browser (2).

2. A directory server (12) according to claim 1, wherein the program (30) is arranged to accept configuration information to permit the browser (2) to connect to each of the plurality of information servers (3-7).

3. A directory server (12) according to claim 1, further comprising means for receiving a request for information from the browser (2), the request relating to information available from the plurality of information servers (3-7), the program including configuration information to permit the browser (2) to connect to each of the plurality of information servers (3-7) in accordance with the information request.

4. A directory server according to any one of the preceding claims, further comprising means for associating the program (30) with verification information identifying it as a trusted program.

5. A directory server according to claim 4, wherein said associating means comprise means for digitally signing the program (30).

6. A directory server according to any one of the preceding claims, wherein the program (30) is an applet.

7. A directory server according to claim 6, including a web server for providing a web page which includes the applet (30).

8. A directory server according to any one of the preceding claims, further comprising means for receiving payment for procuring access to the information servers (3-7).

9. A directory server according to any one of the preceding claims, arranged to offer a single trading package covering two or more of the plurality of information servers.

10. A method of providing information to a browser (2) from a plurality of information servers (3-7), comprising:
providing a program (30) by a directory server to the browser (2) for execution by the browser (2), the program (30) being operative to permit the browser (2) to connect to each of the plurality of information servers (3-7) in order to receive information from the information servers (3-7) for concurrent display by the browser (2).

11. A method according to claim 10, including the step of supplying configuration information to the program (30) to permit the browser (2) to connect to each of the plurality of information servers (3-7).

12. A method according to claim 10, further comprising the step of receiving a request for information from the browser (2), the request relating to information available from the plurality of information servers (3-7), and in response to said request configuring the program (30) to permit the browser (2) to connect to each of the plurality of information servers (3-7) in accordance with the information request.

13. A method according to any one of claims 10 to 12, including associating verification information with the program (30) to signify that it is a trusted program:

14. A method according to claim 13, wherein the step of associating verification information comprises digitally signing the program (30) at the directory server (12).

15. A method according to any one of claims 10 to 14, further comprising downloading the program (30) to a client (1).

16. A method according to claim 15, wherein the program (30), in its default state, prevents the browser (2) from connecting to any of the information servers (3-7), the method further comprising the step of requesting permission from the client (1) to override the default state in respect of the information servers (3-7) corresponding to the information request.

17. A method according to claim 16, including verifying that the program (30) is a trusted program.

18. A method according to claim 16 or 17, further comprising, in response to receiving said permission from the client (1), opening a connection to each of the information servers (3-7) in accordance with the configuration of the program (30).

19. A method according to claim 18, further comprising providing means for translating the symbology of any one of the information servers (3-7) to a common symbology.

20. A method according to any one of claims 10 to 19, wherein the program (30) is an applet.

21. A method according to any one of claims 10 to 20, further comprising providing configuration information for a prepackaged set of information servers in response to a single request.

22. A method according to any one of claims 10 to 21, comprising arranging payment at the directory server (12) for procuring access to the information servers (3-7).

23. A computer program (30) for execution by a browser (2) to enable the browser (2) to connect to a plurality of information servers (3-7), comprising:
configuration information to permit the browser (2) to connect to each of a plurality of information servers (3-7) in accordance with an information request received from the browser (2) at a directory server (12), the program (30) being arranged such that, when executed by the browser (2), the program connects to the plurality of information servers (3-7) in accordance with the information request in order to receive information from the information servers (3-7) for concurrent display by the browser (2).

24. A computer program according to claim 23 on a carrier medium.

## Patentansprüche

1. Verzeichnisserver (12) zum Ermöglichen, dass sich ein Browser (2) zu einer Mehrzahl von Informationsservern (3 - 7) verbindet, umfassend:
eine Einrichtung zum Bereitstellen eines Programmes (30) für den Browser (2) zur Ausführung durch den Browser (2), wobei das Programm (30) so funktionsfähig ist, dass es dem Browser (2) gestattet, sich zu jedem der Mehrzahl von Informationsservern (3 - 7) zu verbinden, um Informationen zum gleichzeitigen Anzeigen durch den Browser (2) von den Informationsserver (3 - 7) zu empfangen.

2. Verzeichnisserver (12) nach Anspruch 1, wobei das Programm (30) dazu eingerichtet ist, Konfigurationsinformationen zu akzeptieren, um es dem Browser (2) zu gestatten, sich zu jedem der Mehrzahl von Informationsservern (3 - 7) zu verbinden.

3. Verzeichnisserver (12) nach Anspruch 1, ferner umfassend: eine Einrichtung zum Empfangen einer Anfrage nach Informationen vom Browser (2), wobei sich die Anfrage auf Informationen bezieht, die von der Mehrzahl von Informationsservern (3 - 7) verfügbar sind, wobei das Programm Konfigurationsinformationen aufweist, um es dem Browser (2) zu gestatten, sich in Übereinstimmung mit der Informationsanfrage zu jedem der Mehrzahl von Informationsservern (3 - 7) zu verbinden.

4. Verzeichnisserver nach einem der vorhergehenden Ansprüche, ferner umfassend: eine Einrichtung zum Assoziieren des Programmes (30) mit Verifizierungsinformationen, die es als ein vertrauenswürdiges Programm identifizieren.

5. Verzeichnisserver nach Anspruch 4, wobei die Assoziierungseinrichtung eine Einrichtung zum digitalen Signieren des Programmes (30) umfasst.

6. Verzeichnisserver nach einem der vorhergehenden Ansprüche, wobei das Programm (30) ein Applet ist.

7. Verzeichnisserver nach Anspruch 6, aufweisend einen Webserver zum Bereitstellen einer Webseite, die das Applet (30) enthält.

8. Verzeichnisserver nach einem der vorhergehenden Ansprüche, ferner umfassend: eine Einrichtung zum Empfangen einer Zahlung zur Zugangsverschaffung zu den Informationsservern (3 - 7).

9. Verzeichnisserver nach einem der vorhergehenden Ansprüche, der dazu eingerichtet ist, ein einzelnes Handelspaket anzubieten, welches zwei oder mehr von der Mehrzahl von Informationsservern abdeckt.

10. Verfahren zum Bereitstellen von Informationen von einer Mehrzahl von Informationsservern (3 - 7) an einen Browser (2), umfassend:
Bereitstellen eines Programmes (30) durch einen Vezeichnisserver an den Browser (2) zur Ausführung durch den Browser (2), wobei das Programm (30) so funktionsfähig ist, dass es dem Browser (2) gestattet, sich zu jedem der Mehrzahl von Informationsservern (3 - 7) zu verbinden, um Informationen zum gleichzeitigen Anzeigen durch den Browser (2) von den Informationsservern (3 - 7) zu empfangen.

11. Verfahren nach Anspruch 10, aufweisend den Schritt des Zuführens von Konfigurationsinformationen an das Programm (30), um es dem Browser (2) zu gestatten, sich zu jedem der Mehrzahl von Informationsservern (3 - 7) zu verbinden.

12. Verfahren nach Anspruch 10, ferner umfassend den Schritt des Empfangens einer Anfrage nach Informationen vom Browser (2), wobei sich die Anfrage auf Informationen bezieht, die von der Mehrzahl von Informationsservern (3 - 7) verfügbar sind, und des Konfigurierens des Programmes (30) als Antwort auf die Anfrage so, dass es dem Browser (2) gestattet wird, sich in Übereinstimmung mit der Informationsanfrage zu jedem der Mehrzahl von Informationsservern (3 - 7) zu verbinden.

13. Verfahren nach einem der Ansprüche 10 bis 12, aufweisend: Assoziieren von Verifizierungsinformationen mit dem Programm (30), um zu kennzeichnen, dass es ein vertrauenswürdiges Programm ist.

14. Verfahren nach Anspruch 13, wobei der Schritt des Assoziierens von Verifizierungsinformationen digitales Signieren des Programmes (30) auf dem Verzeichnisserver (12) umfasst.

15. Verfahren nach einem der Ansprüche 10 bis 14, ferner umfassend: Herunterladen des Programmes (30) auf einen Client (1).

16. Verfahren nach Anspruch 15, wobei das Programm (30) in seinem Standardzustand verhindert, dass sich der Browser (2) mit irgendeinem der Informationsserver (3 - 7) verbindet, wobei das Verfahren ferner den Schritt des Anforderns einer Genehmigung vom Client (1) umfasst, die den Standardzustand bezüglich der Informationsserver (3 - 7) entsprechend der Informationsanfrage überschreibt.

17. Verfahren nach Anspruch 16, aufweisend: Verifizieren, dass das Programm (30) ein vertrauenswürdiges Programm ist.

18. Verfahren nach Anspruch 16 oder 17, ferner umfassend als Antwort auf das Empfangen der Genehmigung vom Client (1): Öffnen einer Verbindung zu jedem der Informationsserver (3 - 7) in Übereinstimmung mit der Konfiguration des Programmes (30).

19. Verfahren nach Anspruch 18, ferner umfassend: Bereitstellen einer Einrichtung zum Übersetzen der Symbolik von jedem der Informationsserver (3 - 7) in eine gemeinsame Symbolik.

20. Verfahren nach einem der Ansprüche 10 bis 19, wobei das Programm (30) ein Applet ist.

21. Verfahren nach einem der Ansprüche 10 bis 20, ferner umfassend als Antwort auf eine einzelne Anfrage: Bereitstellen von Konfigurationsinformationen für einen vorgepackten Satz von Informationsservern.

22. Verfahren nach einem der Ansprüche 10 bis 21, umfassend: Einrichten einer Zahlung an den Verzeichnisserver (12) zur Zugangsverschaffung zu den Informationsservern (3 - 7).

23. Computerprogramm (30) zur Ausführung durch einen Browser (2), um es dem Browser (2) zu ermöglichen, sich zu einer Mehrzahl von Informationsservern (3 - 7) zu verbinden, umfassend: Konfigurationsinformationen, um es dem Browser (2) zu gestatten, sich in Übereinstimmung mit einer Informationsanfrage, die vom Browser (2) von einem Verzeichnisserver (12) empfangen wurde, zu jedem der Mehrzahl von Informationsservern (3 - 7) zu verbinden, wobei das Programm (30) dazu eingerichtet ist, dass das Programm, wenn es durch den Browser (2) ausgeführt wird, sich zu der Mehrzahl von Informationsservern (3 - 7) in Übereinstimmung mit der Informationsanfrage verbindet, um Informationen zum gleichzeitigen Anzeigen durch den Browser (2) von den Informationsservern (3 - 7) zu empfangen.

24. Computerprogramm nach Anspruch 23 auf einem Trägermedium.

## Revendications

1. Serveur de répertoire (12) destiné à permettre à un navigateur (2) de se connecter à une pluralité de serveurs d'informations (3 à 7), comprenant :
un moyen destiné à fournir un programme (30) au navigateur (2), pour être exécuté par le navigateur (2), le programme (30) étant en mesure de permettre au navigateur (2) de se connecter à chacun des serveurs dans la pluralité de serveurs d'informations (3 à 7) afin de recevoir en provenance des serveurs d'informations (3 à 7) des informations à afficher concurremment par le navigateur (2).

2. Serveur de répertoire (12) selon la revendication 1, dans lequel le programme (30) est conçu pour accepter des informations de configuration afin de permettre au navigateur (2) de se connecter à chacun des serveurs dans la pluralité de serveurs d'informations (3 à 7).

3. Serveur de répertoire (12) selon la revendication 1, comprenant en outre un moyen destiné à recevoir du navigateur (2) une demande d'informations, la demande portant sur les informations disponibles auprès de la pluralité de serveurs d'informations (3 à 7), le programme comprenant des informations de configuration destinées à permettre au navigateur (2) de se connecter à chacun des serveurs dans la pluralité de serveurs d'informations (3 à 7) en fonction de la demande d'informations.

4. Serveur de répertoire selon l'une quelconque des revendications précédentes, comprenant en outre un moyen destiné à associer le programme (30) à des informations de vérification qui l'identifient comme un programme de confiance.

5. Serveur de répertoire selon la revendication 4, dans lequel ledit moyen d'association comprend un moyen destiné à signer numériquement le programme (30).

6. Serveur de répertoire selon l'une quelconque des revendications précédentes, dans lequel le programme (30) est une appliquette.

7. Serveur de répertoire selon la revendication 6, comprenant un serveur web destiné à fournir une page web qui comprend l'appliquette (30).

8. Serveur de répertoire selon l'une quelconque des revendications précédentes, comprenant en outre un moyen destiné à recevoir un paiement pour fournir l'accès aux serveurs d'informations (3 à 7).

9. Serveur de répertoire selon l'une quelconque des revendications précédentes, conçu pour offrir une unique plate-forme de négoce couvrant deux serveurs ou plus dans la pluralité de serveurs d'informations.

10. Procédé de fourniture à un navigateur (2) d'informations provenant d'une pluralité de serveurs d'informations (3 à 7), comprenant l'étape consistant à :
fournir au navigateur (2), par un serveur de répertoire, un programme (30) destiné à être exécuté par le navigateur (2), le programme (30) étant en mesure de permettre au navigateur (2) de se connecter à chacun des serveurs dans la pluralité de serveurs d'informations (3 à 7) afin de recevoir en provenance des serveurs d'informations (3 à 7) des informations à afficher concurremment par le navigateur (2).

11. Procédé selon la revendication 10, comprenant l'étape consistant à fournir des informations de configuration au programme (30) afin de permettre au navigateur (2) de se connecter à chacun des serveurs dans la pluralité de serveurs d'informations (3 à 7).

12. Procédé selon la revendication 10, comprenant en outre les étapes consistant à recevoir du navigateur (2) une demande d'informations, la demande portant sur les informations disponibles auprès de la pluralité de serveurs d'informations (3 à 7) et, en réponse à cette demande, configurer le programme (30) afin de permettre au navigateur (2) de se connecter à chacun des serveurs dans la pluralité de serveurs d'informations (3 à 7) en fonction de la demande d'informations.

13. Procédé selon l'une quelconque des revendications 10 à 12, comprenant l'étape consistant à associer le programme (30) à des informations de vérification afin de signifier qu'il constitue un programme de confiance.

14. Procédé selon la revendication 13, dans lequel l'étape d'association d'informations de vérification comprend l'étape consistant à signer numériquement le programme (30) sur le serveur de répertoire (12).

15. Procédé selon l'une quelconque des revendications 10 à 14, comprenant en outre l'étape consistant à télécharger le programme (30) vers un client (1).

16. Procédé selon la revendication 15, dans lequel le programme (30), dans son état par défaut, empêche le navigateur (2) de se connecter à l'un quelconque des serveurs d'informations (3 à 7), le procédé comprenant en outre l'étape consistant à demander au client (1) la permission de modifier l'état par défaut pour les serveurs d'informations (3 à 7) correspondant à la demande d'informations.

17. Procédé selon la revendication 16, comprenant l'étape consistant à vérifier que le programme (30) est un programme de confiance.

18. Procédé selon la revendication 16 ou 17, comprenant en outre, en réponse à la réception de ladite permission du client (1), l'étape consistant à ouvrir une connexion avec chacun des serveurs dans la pluralité de serveurs d'informations (3 à 7), en fonction de la configuration du programme (30).

19. Procédé selon la revendication 18, comprenant en outre l'étape consistant à fournir un moyen destiné à traduire la symbolique de l'un quelconque des serveurs d'informations (3 à 7) en une symbolique commune.

20. Procédé selon l'une quelconque des revendications 10 à 19, dans lequel le programme (30) est une appliquette.

21. Procédé selon l'une quelconque des revendications 10 à 20, comprenant en outre l'étape consistant à fournir des informations de configuration pour un ensemble préconstitué de serveurs d'informations en réponse à une demande unique.

22. Procédé selon l'une quelconque des revendications 10 à 21, comprenant l'étape consistant à organiser un paiement sur le serveur de répertoire (12) afin de fournir un accès aux serveurs d'informations (3 à 7).

23. Programme d'ordinateur (30) destiné à être exécuté par un navigateur (2) afin de permettre au navigateur (2) de se connecter à une pluralité de serveurs d'informations (3 à 7), comprenant :
des informations de configuration destinées à permettre au navigateur (2) de se connecter à chacun des serveurs dans une pluralité de serveurs d'informations (3 à 7) en fonction d'une demande d'informations reçue du navigateur (2) sur un serveur de répertoire (12), le programme (30) étant conçu afin que, lorsqu'il est exécuté par le navigateur (2), le programme se connecte à la pluralité de serveurs d'informations (3 à 7) en fonction de la demande d'informations afin de recevoir en provenance des serveurs d'informations (3 à 7) des informations à afficher concurremment par le navigateur (2).

24. Programme d'ordinateur selon la revendication 23, sur un support de transport.
